# EUROPÄISCHE PATENTSCHRIFT

(11) **EP 3 035 474 B1**
(45) Veröffentlichungstag und Bekanntmachung des Hinweises auf die Patenterteilung: **08.09.2021**
(21) Anmeldenummer: 15195451.8
(22) Anmeldetag: 19.11.2015
(51) Int. Cl.: H02H 7/122, H02H 7/125, H02M 1/32

(54) **SCHUTZSCHALTUNG FÜR EINEN WECHSELRICHTER SOWIE WECHSELRICHTERSYSTEM**
PROTECTION CIRCUIT FOR AN INVERTER AND INVERTER SYSTEM
CIRCUIT PROTECTEUR POUR UN ONDULEUR ET SYSTEME D'ONDULEUR

(30) Priorität: 19.12.2014 DE 102014226690
(43) Veröffentlichungstag der Anmeldung: 22.06.2016
(73) Patentinhaber: ZIEHL-ABEGG SE, 74653 Künzelsau (DE)
(72) Erfinder: Schnell, Marco, 74629 Pfedelbach-Renzen (DE); Werner, Samuel, 74523 Schwäbisch Hall (DE); Nowosad, Dirk, 74653 Künzelsau (DE)
(74) Vertreter: Ullrich & Naumann PartG mbB

(56) Entgegenhaltungen:
- DE-A1- 19 953 606
- DE-A1-102006 014 297
- US-A- 3 678 368
- US-A1- 2011 019 316
- None

## Beschreibung

Die Erfindung betrifft eine Schutzschaltung für einen Wechselrichter, insbesondere für einen Wechselrichter für einen Elektromotor, wobei der Wechselrichter ein Steuersystem und ein durch das Steuersystem mittels Ansteuersignalen angesteuertes Leistungsteil aufweist und wobei das Steuersystem zur periodischen Ausgabe eines Steuerpulses ausgebildet ist. Die Erfindung betrifft ferner ein entsprechendes Wechselrichtersystem.

In der Praxis finden Wechselrichtersysteme weite Verbreitung. Ein Wechselrichtersystem erzeugt aus einer Eingangsspannung eine Wechselspannung, deren Frequenz und Amplitude in weiten Bereichen wählbar ist. Ein wichtiger Anwendungsfall von Wechselrichtersystemen ist die Ansteuerung von Elektromotoren, beispielsweise permanent erregten Synchronmotoren. Sehr häufig wird die Eingangsspannung durch ein Energieversorgungsnetzwerk bereitgestellt, wobei das Wechselrichtersystem an eine oder alle drei Phasen des Energieversorgungsnetzwerks angeschlossen ist. Bei Wechselrichtersystemen mit einem Gleichspannungszwischenkreis erzeugt ein Gleichrichter aus der Eingangsspannung eine Gleichspannung, die durch ein Leistungsteil des Wechselrichtersystems in die gewünschte Wechselspannung gewandelt wird. Das Leistungsteil umfasst hierzu Halbleiterschalter, die durch ein Steuersystem, meist mit pulsweiten-modulierten Signalen (PWM-Signalen), angesteuert werden. Als Halbleiterschalter werden häufig IGBTs (Insulated Gate Bipolar Transistor) oder Feldeffekttransistoren eingesetzt.

In Wechselrichtersystemen kann es vorkommen, dass einzelne Halbleiterschalter nicht mehr korrekt funktionieren. Relativ unkritisch sind hierbei Fehler, bei denen der Halbleiterschalter in einem niederohmigen Zustand verbleibt. In diesem Fall greift entweder die Laststrombegrenzung ein oder der Halbleiterschalter wird durch seine Eigenerwärmung zerstört. Relativ unkritisch sind auch Zustände, bei denen der Halbleiterschalter in einem ausreichend hochohmigen Zustand verbleibt, da keine problematischen Ströme in die Last zu erwarten sind. Besonders kritisch sind jedoch die Fehlerzustände, bei denen der Halbleiterschalter einen derartigen ohmschen Widerstand aufweist, dass die Verlustleistung in dem Halbleiter für eine Zerstörung des Halbleiters durch die Eigenerwärmung zu gering ist und gleichzeitig der Zwischenkreis nicht kurzgeschlossen wird. In dieser Situation werden unkontrolliert Ströme in die Last geleitet, ohne dass die üblichen Schutzmaßnahmen, wie eine Strombegrenzung, greifen.

Eine Möglichkeit, wie dieser Zustand entstehen kann, ist als PTOM (Partial Turn On Mode) bekannt. In dieser Situation kann eine beliebige Ansteuerspannung an dem Halbleiterschalter anliegen, ohne dass sich der Zustand des defekten Halbleiterschalters ändert. Die Ansteuerspannung kann den Halbleiterschalter also nicht mehr steuern. Ein ähnliches Fehlerbild ist das sogenannte Loss-of-Gate, bei dem die Ansteuerspannung nicht mehr an dem Halbleiterschalter anliegt, weil beispielsweise ein Bond-Draht gebrochen ist oder etwa ein Steuersystem, das die entsprechende Ansteuerspannung an den Halbleiterschalter ausgeben soll, nicht mehr korrekt funktioniert. Auch in diesem Zustand kann der Halbleiterschalter in einem undefinierten Zustand verbleiben.

Bei beiden Fehlerbildern wird ein unkontrollierter Strom in die Last eingeprägt, der diese unzulässig erwärmen oder eine Fehlfunktion oder gar eine Zerstörung der Last hervorrufen kann. Wenn beispielsweise das Wechselrichtersystem ein dreiphasiges Drehstromnetzwerk für einen Synchronmotor erzeugt und ein Zweig der Wechselrichterbrücke nicht mehr korrekt arbeitet, so wird das im Stator erzeugte Drehfeld extrem unsymmetrisch eingeprägt. Dies führt zu einer erheblichen mechanischen Belastung des Motors und kann die Wicklung der dauerhaft bestromten Spule des Stators zerstören. In beiden Fällen kann ein für die Anwendung und den Benutzer sicherer Zustand nicht mehr gewährleistet werden. Eine Schutzschaltung, die auch in diesen Fehlerzuständen ein sicheres Abschalten des Wechselrichtersystems ermöglicht, ist daher notwendig.

Nach der Fehlerbetrachtungsmethode des VDE (Verband der Elektrotechnik, Elektronik und Informationstechnik) muss zu dem angesprochenen PTOM bzw. Loss-of-Gate noch ein weiterer beliebiger Fehler abgefangen werden. Dies betrifft vor allem eine Fehlfunktion der Halbleiteransteuerung, die unter Umständen nicht mehr kontrolliert abgeschaltet werden kann. In diesem Fall muss eine Schutzschaltung auch diese kritischen Fehlerkombinationen abfangen können.

Aus der US 3 678 368 A ist eine Schutzschaltung bekannt, die den Einschaltstrom begrenzt. Diese Schutzschaltung ist Teil eines DC/DC-Wandlers, bei dem ein magnetischer Oszillator eine bipolare Wechselspannung erzeugt, die dann transformiert und mit einem Gleichrichter wieder gleichgerichtet wird. In einer Zuleitung zu dem magnetischen Oszillator ist ein Widerstand angeordnet, der Startstromspitzen begrenzt. Wenn die Schaltung korrekt gestartet ist, wird der Widerstand durch einen Thyristor überbrückt.

Die US 2011/0019316 A1, die den Oberbegriff des Anspruchs 1 bildet, betrifft ebenso eine Schutzschaltung zum Begrenzen des Anschaltstroms. Einem DC/DC-Wandler ist eine Schutzschaltung vorgeschaltet, durch die ein Pufferkondensator des DC/DC-Wandlers über einen Widerstand mit einem begrenzten Strom geladen wird. Wenn der Pufferkondensator ausreichend geladen und die Erzeugung eines PWM-Signals gestartet ist, schaltet ein MOSFET der Schutzschaltung durch und überbrückt den Widerstand. Dadurch wird während des Betriebs der Schaltung ein unnötiger Spannungsabfall über den Widerstand vermieden.

Der vorliegenden Erfindung liegt die Aufgabe zugrunde, eine Schutzschaltung und ein Wechselrichtersystem der eingangs genannten Art derart auszugestalten und weiterzubilden, dass der Wechselrichter bei einer Störung im Leistungsteil und/ oder im Steuersystem in einen sicheren Zustand versetzt werden kann.

Erfindungsgemäß wird die voranstehende Aufgabe durch die Merkmale des Anspruchs 1 gelöst. Danach ist die in Rede stehende Schutzschaltung gekennzeichnet, durch ein Sicherungselement, eine Schalteinrichtung und eine Ansteuerschaltung, wobei das Sicherungselement in einer Zuleitung zu dem Leistungsteil angeordnet ist, wobei die Schalteinrichtung derart mit dem Sicherungselement verschaltet ist, dass die Schalteinrichtung in einem durchgeschalteten Zustand das Sicherungselement überbrückt, wobei die Ansteuerschaltung einen Steuereingang aufweist, an dem der Steuerpuls anliegt, und wobei die Ansteuerschaltung derart ausgebildet ist, dass die Ansteuerschaltung nach Empfang eines Steuerpulses oder mehrerer aufeinander folgender Steuerpulse für eine vorbestimmte Zeitspanne ein Schaltsignal an die Schalteinrichtung ausgibt, wodurch die Schalteinrichtung bei periodischem Empfang des Steuerpulses durchgeschaltet ist und wodurch bei Ausbleiben des Steuerpulses die Schalteinrichtung nach der vorbestimmten Zeitspanne öffnet und eine Sicherung des Wechselrichters durch das Sicherungselement auslöst.

Hinsichtlich eines Wechselrichtersystems ist die voranstehende Aufgabe durch die Merkmale des Anspruchs 14 gelöst. Danach umfasst das Wechselrichtersystem ein Steuersystem, ein Leistungsteil und eine erfindungsgemäße Schutzschaltung, wobei das Steuersystem zur Ausgabe von Ansteuersignalen an das Leistungsteil zum Erzeugen und Ausgeben einer Wechselspannung ausgebildet ist, wobei das Steuersystem zusätzlich zur periodischen Ausgabe eines Steuerpulses ausgebildet ist, der auf die Schutzschaltung geschaltet ist.

In erfindungsgemäßer Weise ist zunächst erkannt worden, dass eine Schutzschaltung dann besonders gut auf Fehlerszenarien innerhalb des Wechselrichters reagieren kann, wenn Steuerpulse aus dem Steuersystem geeignet verwendet werden. Als Steuerpulse werden in diesem Zusammenhang sämtliche Signale verstanden, die eine Funktionsbereitschaft eines Steuersystems belegen. Diese Steuerpulse könnten daher auch als Heart-Beat-Signale oder als Watchdog-Signale bezeichnet werden. Das Steuersystem sendet Steuerpulse daher periodisch aus, wobei ein Steuerpuls vorzugsweise durch ein in dem Steuersystem arbeitenden Mikrorechner, beispielsweise ein Mikrocontroller, ausgegeben werden. Entsprechende Programme und Verfahren zum Erzeugen und periodischen Ausgeben eines Steuerpulses sind aus der Praxis bekannt.

Zur Nutzung dieser Steuerpulse umfasst die erfindungsgemäße Schutzschaltung ein Sicherungselement, eine Schalteinrichtung und eine Ansteuerschaltung. Das Sicherungselement ist in einer Zuleitung zu dem Leistungsteil des Wechselrichters angeordnet. Die Schalteinrichtung ist derart mit dem Sicherungselement verschaltet, dass die Schalteinrichtung das Sicherungselement dann überbrückt, wenn die Schalteinrichtung sich in einem durchgeschalteten Zustand befindet. Auf diese Weise kann durch Versetzen der Schalteinrichtung in einen durchgeschalteten Zustand das Sicherungselement vor einer eventuellen Überlastung geschützt werden.

Die Ansteuerschaltung wird in der erfindungsgemäßen Schutzschaltung dazu verwendet, aus dem Steuerpuls aus dem Steuersystem ein Schaltsignal für die Schalteinrichtung zu erzeugen. Hierzu weist die Ansteuerschaltung einen Steuereingang auf, in den der Steuerpuls eingegeben wird. Die Ansteuerschaltung erzeugt basierend auf dem empfangenen Steuerpuls oder auf mehreren aufeinanderfolgenden Steuerpulsen ein Schaltsignal für die Schalteinrichtung. Dieses Schaltsignal wird für eine vorbestimmte Zeitspanne auf einem Wert gehalten, der die Schalteinrichtung, eventuell unter Zwischenschaltung von weiteren Komponenten, in einen durchgeschalteten Zustand versetzt.

Durch diese erfindungsgemäße Kombination aus Steuerpulsen und Ansteuerschaltung kann erreicht werden, dass bei periodischem Empfang des Steuerpulses konstant ein Schaltsignal an die Schalteinrichtung ausgegeben wird, wodurch die Schalteinrichtung in einem durchgeschalteten Zustand verbleibt. Bei Ausbleiben des Steuerpulses besteht die Möglichkeit, bis zum Ablauf der vorbestimmten Zeitspanne die Erzeugung des Schaltsignals wieder "aufzufrischen", indem ein neuer Steuerpuls an die Ansteuerschaltung ausgegeben wird. Ist die vorbestimmte Zeitspanne ohne Empfang eines weiteren Steuerpulses verstrichen, so wird kein Schaltsignal mehr erzeugt und die Schalteinrichtung öffnet, d.h. der durchgeschaltete Zustand wird verlassen und damit ein hochohmiger Zustand zwischen den beiden Anschlüssen der Schalteinrichtung eingenommen. Auf diese Weise fließt der Strom in der Zuleitung zu dem Leistungsteil nicht mehr über die Schalteinrichtung, sondern durch das Sicherungselement. Dadurch kann das Sicherungselement auslösen. Denkbar wäre hierbei beispielsweise die Beschränkung des fließenden Stroms auf einen vordefinierbaren Wert oder das Erzeugen einer hochohmigen Trennung der Zuleitung von dem Leistungsteil. Auf diese Weise kann ein sicherer Betrieb der Schutzschaltung in einem Normalzustand und gleichzeitig ein Absichern des Wechselrichters bzw. der angeschlossenen Last bei Ausbleiben des Steuerpulses erreicht werden. Auf diese Weise kann ohne allzu aufwändige Zusatzbeschaltung eine Schutzschaltung geschaffen werden, mit der ein Leistungsteil in einem PTOM oder bei einem Loss-of-Gate in einen sicheren Betriebszustand versetzt werden kann. Auf diese Weise werden der Wechselrichter und die an den Wechselrichter angeschlossene Last vor weiterem Schaden geschützt.

Der Begriff "Zuleitung", in der das Sicherungselement angeordnet ist, kann sich auf verschiedenste Bereiche zwischen Energieversorgung und Leistungsteil beziehen. Wenn der Wechselrichter beispielsweise einen Gleichspannungszwischenkreis aufweist, so könnte das Sicherungselement in der Leitung für die positive Zwischenkreisgleichspannung angeordnet sein. Es wäre aber auch denkbar, das Sicherungselement bei Anschluss des Wechselrichters an ein Energieversorgungsnetzwerk in den Wechselspannungsbereich anzuordnen. Bei einer einphasigen Ankopplung könnte das Sicherungselement in einem Anschlussleiter zu der genutzten Phase angeordnet sein. Bei einer dreiphasigen Ankopplung könnte für jede der Phasen ein entsprechendes Sicherungselement vorgesehen sein, wobei dann auch mehrere Schalteinrichtungen oder zumindest mehrere unabhängige Pole der Schalteinrichtung vorgesehen sein sollten.

Unter "durchgeschalteter Zustand" wird in diesem Zusammenhang verstanden, dass der ohmsche Widerstand zwischen den beiden Anschlüssen eines Schaltkontakts der Schalteinrichtung einen niedrigen Widerstandswert, vorzugsweise kleiner als 1 Ω, besonders bevorzugter Weise kleiner als 0,1 Ω aufweist.

Die "vorbestimmte Zeitspanne", nach der die Ausgabe des Schaltsignals beendet wird, ist vorzugsweise durch das Design der Ansteuerschaltung definiert. Dabei sollte die Zeitspanne in Bezug auf einen Steuerpuls derart gewählt werden, dass die Zeitspanne größer ist als die Periodendauer zwischen zwei aufeinanderfolgenden Steuerpulsen. Vorzugsweise ist die vorbestimmte Zeitspanne fünfmal, besonders bevorzugter Weise zehnmal größer als die Periodendauer zwischen zwei aufeinanderfolgenden Steuerpulsen.

Das Sicherungselement kann auf verschiedenste Arten gebildet sein. Der Begriff "Sicherungselement" bezieht sich dabei ganz allgemein auf ein Bauteil oder eine Baugruppe, das/die in der Lage ist, einen möglichen Stromfluss in der Zuleitung auf einen maximalen Wert zu begrenzen. Dies kann durch eine Unterbrechung des Stromkreises bei Überschreiten einer maximalen Strombelastung (wie beispielsweise bei einer Schmelzsicherungen) oder durch eine strombegrenzende Wirkung (wie beispielsweise bei einem Widerstand) erfolgen. Einem Fachmann sind verschiedenste Bauteile bekannt, die diese Anforderung erfüllen, wobei nachfolgend auf einige bevorzugte Ausführungsbeispiele Bezug genommen wird. Wesentlich für die Dimensionierung des Sicherungselements ist dabei, dass das Sicherungselement bei Erreichen eines kritischen Zustands sicher auslöst. Dies wird im Normalfall von den üblichen Betriebsbedingungen des Wechselrichters und der angeschlossenen Last abhängen. Wenn beispielsweise die Last, die mit dem Wechselrichter betrieben wird, einen Elektromotor umfasst, so wird der Wechselrichter meist dediziert auf den angetriebenen Elektromotor abgestimmt und ist in vielen Fällen sogar in dem Gehäuse des Elektromotors integriert. Dadurch lässt sich recht einfach ein Sicherungselement angeben, das den geforderten Rahmenbedingungen Rechnung trägt. Auch in anderen Anwendungsfällen sind meist die Rahmenbedingungen für den Betrieb ausreichend bekannt, um die Voraussetzungen für einen kritischen Zustand zu definieren.

Üblicherweise wird das Steuersystem durch die gleiche Quelle mit Energie versorgt wie das Leistungsteil und die Schutzschaltung. Damit wird bei einer bevorzugten Anordnung des Sicherungselements das Steuersystem zunächst über das Sicherungselement mit Energie versorgt. Bei Verbinden des Wechselrichtersystems mit der Energieversorgung wird das Steuersystem gestartet. Dies beinhaltet in den meisten Fällen das Laden eines Steuerprogramms in einen Mikrorechner, beispielsweise einen Mikrocontroller. In dieser Phase des Einschaltens ist der Strom in der Zuleitung zum Leistungsteil noch relativ niedrig, da das Steuersystem die Halbleiterschalter der Wechselrichterbrücke noch nicht ansteuert und damit noch kein Strom in die Last eingeprägt wird. Bei dieser Ausgestaltung sollte damit das Sicherungselement in der Lage sein die Energie für das Steuersystem und die Schutzschaltung selbst zu übertragen. Da ferner nach dem Einschalten des Wechselrichtersystems interne Kapazitäten (beispielsweise eine Zwischenkreiskapazität) oder Induktivitäten (beispielsweise eine Filterdrossel) geladen werden, sollte das Sicherungselement zusätzlich diese Ströme aufnehmen können.

Eine mögliche Ausgestaltung des Sicherungselements könnte in einem PTC (Positive Temperature Coefficient) Widerstand bestehen. Die Verwendung von PTCs in Zuleitungen von Geräten ist insbesondere bei Einschaltstrombegrenzungen bekannt. Hierbei wird ausgenutzt, dass sich ein PTC durch einen Stromfluss erwärmt und zunehmend hochohmig wird. Dadurch kann der Stromfluss begrenzt werden. Durch Verwendung eines PTCs als Sicherungselement in einer erfindungsgemäßen Schutzschaltung kann ein Zusatznutzen realisiert werden, der über ein Absichern beim Einschalten eines Gerätes hinausgeht. Wenn der PTC als Sicherungselement für die erfindungsgemäße Schutzschaltung verwendet wird, sollte dieser so dimensioniert sein, dass er die Einschaltströme problemlos leiten kann. Um als Sicherungselement zu fungieren, sollte er zusätzlich so dimensioniert sein, dass beispielsweise bei einem PTOM ein kritischer Strom in die Last nicht mehr fließen kann, sodass eine thermische oder andere daraus resultierende Beschädigung der Last unterbunden wird.

Gemäß einer anderen Ausgestaltung könnte das Sicherungselement durch eine Schmelzsicherung gebildet sein, d.h. das Sicherungselement unterbricht bei dieser Ausgestaltung bei Überschreiten eines vordefinierten maximalen Stromflusses die Zuleitung zum Leistungsteil und damit den Stromkreis. Auch hierzu gelten die voranstehenden Ausführungen hinsichtlich deren Dimensionierung entsprechend. Zur Vermeidung eines Auslösens der Schmelzsicherung während des Einschaltvorgangs kann ergänzend eine Einschaltstrombegrenzung vorgesehen sein, beispielsweise in Form eines NTCs.

In einer anderen Ausgestaltung ist das Sicherungselement durch einen Widerstand gebildet. Dabei könnte dieser Widerstand hochohmig und mit ausreichender Fähigkeit zur Leistungsaufnahme dimensioniert sein, so dass der Widerstand bei Öffnen der Schalteinrichtung den in der Zuleitung fließenden Strom begrenzen kann. Diese Ausgestaltung hat den Vorteil, dass die Eingangsspannung in die Schutzschaltung üblicherweise bekannt ist bzw. einen definierten maximalen Wert annimmt. Damit ist diese Ausgestaltung des Sicherungselements vergleichsweise unabhängig von der Last, die durch den Wechselrichter betrieben wird. Für Wechselrichter, die für relativ kleine Leistungen dimensioniert sind, kann auf diese Weise sehr einfach ein Sicherungselement realisiert werden.

In einer besonders bevorzugten Ausgestaltung ist das Sicherungselement jedoch durch einen Sicherungswiderstand gebildet. Ein Sicherungswiderstand - auch bekannt als "Fuse Resistor" - ist ein Widerstand, der in einem Grundzustand einen ersten Widerstandswert aufweist. Üblich sind hier Widerstandswerte von wenigen Ohm bis hin zu dreistelligen Werten. Je nach Ausgestaltung des Sicherungswiderstands können auch Widerstände im zweistelligen kΩ-Bereich erzielt werden. Jeder Sicherungswiderstand hat dabei eine Belastungsgrenze, bis zu der dieser erste Widerstandswert erhalten bleibt. Nach Überschreitung der Grenzbelastung nimmt der Sicherungswiderstand einen zweiten Widerstandswert an, der wesentlich größer als der erste Widerstandswert ist. Üblich sind hierbei Widerstandswerte im MΩ-Bereich. Bei den meisten Sicherungswiderständen ist dieser Prozess unumkehrbar. Nach einmaligem Überschreiten der Grenzbelastung ist damit ein Austausch des Sicherungswiderstands notwendig. Da die hier zu behandelnde Fehlersituation in den meisten Fällen eine umfangreiche Reparatur des Wechselrichtersystems erfordert, ist dieser Umstand im Vergleich zu dem dadurch erzielten Nutzen gering. Sicherungswiderstände haben insbesondere den Vorteil, dass sie schnell auslösen und nach dem Auslösen einen sehr hochohmigen Übergang bilden.

Bei einer möglichen Ausgestaltung eines Sicherungswiderstands ist in dem Widerstand eine Feder vorhanden, die mit einer geringen Menge Zinn in gespanntem Zustand gehalten wird. Diese Ausgestaltung ist bei gewickelten Drahtwiderständen üblich. Durch eine hohe Belastung des Sicherungswiderstands mit einem hohen Strom erwärmt sich dieser, wodurch auch das Zinn sich erwärmt. Bei Überschreiten einer Grenztemperatur ist das Zinn so weich, dass es die Feder nicht länger zurückhalten kann und diese daher in einen entspannten Zustand springt. Hierbei wird der zuvor leitende Kontakt unterbrochen und ein hochohmiger Widerstand zwischen den beiden Anschlüssen des Sicherungswiderstands eingenommen. Denkbar ist auch, dass ein Bereich in dem Widerstand vorhanden ist, der - ähnlich wie bei gewöhnlichen Schmelzsicherungen - bei hoher Strombelastung schmilzt. Entsprechende Ausgestaltungen sind aus der Praxis hinlänglich bekannt.

Prinzipiell kann ein Steuerpuls verschiedene Ausformungen annehmen, solange dieser periodisch durch das Steuerungssystem ausgegeben wird und geeignet durch eine Ansteuerschaltung auswertbar ist. Denkbar wären beispielsweise eine Sinus-Halbschwingung, ein Dreieck oder eine Rampe. In einer bevorzugten Ausgestaltung ist der Steuerpuls jedoch ein Rechteck, d.h. der Steuerpuls nimmt für eine gewisse Zeitspanne einen High-Pegel an und fällt danach wieder auf den Low-Pegel zurück. Die Übergänge zwischen Low- und High-Pegel bzw. zwischen High- und Low-Pegel sind dabei sehr steil, idealerweise annähernd senkrecht. Damit bildet eine Folge von periodisch ausgegebenen Steuerpulsen ein Rechtecksignal. Diese Ausgestaltung hat insbesondere dahingehend Vorteile, dass die in Steuersystemen meist verwendeten Mikrocontroller Rechtecksignale besonders einfach erzeugen können. Vorzugsweise ist das Rechtecksignal dabei unipolar, d.h. es wechselt zwischen einer Spannung von 0 V (Low-Pegel) und einer maximalen Spannung (High-Pegel), beispielsweise 3,3 V oder 5 V.

Vorzugsweise wird die Folge von Steuerpulsen über einen Hochpassfilter in die Ansteuerschaltung eingegeben. Auf diese Weise wird ein in der Ansteuerschaltung eventuell vorhandener Gleichspannungsanteil von dem Steuersystem ferngehalten. Zusätzlich kann eine Strombegrenzung vorgesehen sein, mit der der Strom aus dem Steuersystem in die Ansteuerschaltung begrenzt wird. Diese Strombegrenzung kann im einfachsten Fall durch einen Widerstand gebildet sein.

In einer ganz besonders bevorzugten Ausgestaltung weist die Auswerteschaltung eine Ladungspumpe auf. Ladungspumpen erzeugen aus Wechselsignalen an deren Eingang eine Spannung, die größer als die Eingangsspannung ist. Je nach Ausgestaltung der Ladungspumpe können unterschiedliche Spannungserhöhungen realisiert werden. Einfach aufgebaute Ladungspumpen erreichen eine Spannungsverdopplung. Wesentlich für die Verwendung einer Ladungspumpe in der Auswerteschaltung ist, dass die Folge von Steuerpulsen ein Wechselsignal bildet. Dies ist jedoch durch die Forderung eines periodischen Steuerpulses problemlos erfüllt. Auch hierbei ist die Verwendung von Rechteck-Signalen besonders vorteilhaft, da auf relativ einfache Art und Weise eine annährend konstante Ausgangsspannung aus der Ladungspumpe erreicht werden können.

Vorzugsweise ist die Ladungspumpe im Sinne einer Greinacher-Schaltung aufgebaut. Hierzu weist die Ladungspumpe zwei Dioden und eine Speicherkapazität auf. Die beiden Dioden sind in Reihe geschaltet und weisen beide mit ihrer Durchlassrichtung von einem Massepotential weg. An dem Verbindungspunkt zwischen den beiden Dioden sind die Steuerpulse aufgeschaltet, so dass der Verbindungspunkt den Eingang der Ladungspumpe bildet. Eine der beiden Dioden ist mit ihrer Anode auf Massepotential gelegt. Die Kathode der anderen Diode ist mit einem Anschluss der Speicherkapazität verbunden, während der zweite Anschluss auf Masse liegt. Damit ist die Speicherkapazität zu den beiden Dioden parallel geschaltet. Bei einem High-Pegel eines Steuerpulses kann damit ein Strom über die der Masse abgewandten Diode in den Speicherkondensator fließen. Dadurch wird sukzessive die Speicherkapazität aufgeladen.

In einer bevorzugten Weiterbildung ist parallel zu der Speicherkapazität ein Entladewiderstand geschaltet, über den die Speicherkapazität definiert entladen wird. Dadurch kann durch entsprechende Dimensionierung des Entladewiderstands die Zeit, die ab dem letzten empfangenen Steuerpuls bis zum Deaktivieren des Schaltsignals verstreichen kann, definiert werden. Vorzugsweise ist der Entladewiderstand hochohmig ausgebildet, d.h. der Widerstand ist mindestens 100 kΩ, besonders bevorzugter Weise mindestens 1 MΩ groß.

In einer bevorzugten Ausgestaltung sind die Dioden der Ladungspumpe durch Schottky-Dioden gebildet. Da diese eine kleinere Knickspannung als gewöhnliche Dioden aufweisen, kann die Folge von Steuerpulsen effektiver genutzt werden.

Die Spannung an der Speicherkapazität kann als Schaltsignal genutzt werden. Hierbei kann eine Filterschaltung, beispielsweise in Form einer Tiefpassschaltung vorgesehen sein, um noch vorhandene Wechselanteile herauszufiltern. Auch kann die Filterschaltung eine Schutzfunktion annehmen, indem beispielsweise der fließende Strom begrenzt wird.

In einer ersten bevorzugten Ausgestaltung der Schalteinrichtung ist diese durch einen Transistor gebildet, an dessen Steuereingang das Schaltsignal anliegt. Im Falle eines Bipolartransistors ist dieser Steuereingang beispielsweise durch die Basis gebildet. In einer bevorzugten Weiterbildung ist dieser Transistor durch einen MOSFET (Metal Oxyde Semiconductor Field Effect Transistor) gebildet, so dass der Steuereingang durch das Gate des Transistors gebildet ist. Vorzugsweise ist dabei eine selbstsperrende Ausführung eines MOSFETs verwendet, besonders bevorzugter Weise ein n-Kanal-MOSFET. Der Transistor könnte parallel zu dem Sicherungselement angeordnet sein und bei Anlegen einer Schaltspannung durchschalten und damit den Strom in der Zuleitung zu dem Leistungsteil leiten.

In einer zweiten bevorzugten Ausgestaltung der Schalteinrichtung ist diese durch ein Relais gebildet, das mindestens einen Schaltkontakt und eine Erregerspule aufweist. Einer der mindestens einen Schaltkontakte ist dabei parallel zu dem Sicherungselement geschaltet. Ein Relais mit mehreren Kontakten, beispielsweise drei Kontakten, kann zur Absicherung aller drei Phasen eines Drehstromnetzes verwendet werden. Zum Treiben des Stroms für die Erregerspule kann ein Transistor vorgesehen sein, der vorzugsweise wiederum als MOSFET ausgestaltet ist. Besonders bevorzugter Weise kommt dabei wiederum ein n-Kanal-MOSFET zum Einsatz, der selbstsperrend ausgeführt ist.

Für einen Schutz gegenüber Mehrfachfehlern könnten die Ansteuerschaltung und/ oder die Schalteinrichtung redundant ausgebildet sein. Hierbei könnten zwei im Wesentlichen identische Ansteuerschaltungen vorgesehen sein, die jeweils ein Schaltsignal erzeugen. Bei Verwendung von Transistoren als Schalteinrichtung oder als Treiberstufe für die eigentliche Schalteinrichtung könnten diese für jeden redundanten Zweig der Ansteuerschaltung vorgesehen sein und dabei in Reihe zueinander geschaltet sein. Auf diese Weise kann beispielsweise der Fehler abgefangen werden, dass einer der Transistoren für einen der redundanten Zweige fehlerhaft und dadurch dauerhaft in einem leitenden Zustand ist. Wenn der Steuerpuls an einem anderen Zweig der redundanten Ansteuerschaltung nicht mehr anliegt, kann dennoch die Schutzschaltung ausgelöst werden.

Je nach Ausgestaltung der Schalteinrichtung können einzelne Teile auch redundant aufgebaut sein, während andere Teile lediglich einfach vorhanden sind. Wenn die Schalteinrichtung beispielsweise durch ein Relais gebildet ist, so kann dieses - wenn das Relais beispielsweise UL (Underwriters Laboratories) oder VDE zugelassen ist - lediglich einfach vorhanden sein. Bei einer doppelt ausgeführten Ansteuerschaltung, die jeweils einen Transistor ansteuern, wären die beiden Transistoren in Reihe geschaltet und würden beispielsweise an der einen Seite auf Masse liegen, während die andere Seite mit der Erregerspule verbunden ist, deren zweiter Anschluss wiederum auf einer Versorgungsspannung liegt.

Bei dem erfindungsgemäßen Wechselrichtersystem kann es neben dem Ausfall des Steuersystems, der ein Wegfall der Steuerpulse zur Folge hat, auch zu einer Fehlfunktion innerhalb des Leistungsteils kommen. Sehr viele Wechselrichtersysteme weisen eine Rückkopplung aus dem Lastkreis auf, durch die Rückschlüsse auf den Betriebszustand der Last bzw. des Leistungsteils möglich sind. So benötigt ein Wechselrichter zur Ansteuerung eines EC (Electronically Commutated)-Motors beispielsweise Informationen über die Position des Rotors, um die Spannungen für den Stator korrekt ausgeben zu können. Diese Informationen können durch einen dedizierten Sensor oder durch Schätzverfahren gewonnen werden. In einem Fehlerfall im Leistungsteil wird die Drehbewegung des Motors deutlich ungleichförmiger erfolgen, so dass aus dem Positionssignal Rückschlüsse auf den Betriebszustand des Motors möglich sind. Auch andere Verfahren sind denkbar, beispielsweise eine Summenstrommessung. Einem Fachmann sind entsprechende Verfahren, die Rückschlüsse auf den Betriebszustand der Last und/oder des Leistungsteils zulassen, bekannt. Aus dem bestimmten oder abgeschätzten Betriebszustand kann dann entschieden werden, ob ein kritischer Betriebszustand vorliegt, der das Auslösen der erfindungsgemäßen Schutzschaltung erforderlich macht.

Zur Auswertung von Informationen über den Betriebszustand sind in einer bevorzugten Weiterbildung des erfindungsgemäßen Wechselrichtersystems Mittel zum Erkennen des Betriebszustands vorgesehen. Diese können bei Erkennen eines kritischen Betriebszustands die Erzeugung eines Steuerpulses deaktivieren. Auf diese Weise kann auch bei einem PTOM vom Mikrocontroller aus ein Versetzen der Last in einen sicheren Betriebszustand erzielt werden. Bei Verwenden eines Sicherungswiderstands würde dies bedeuten, dass der Elektromotor vom Versorgungsnetzwerk getrennt und eventuell gezielt über einen Brems-Chopper abgebremst wird.

Es gibt nun verschiedene Möglichkeiten, die Lehre der vorliegenden Erfindung in vorteilhafter Weise auszugestalten und weiterzubilden. Dazu ist einerseits auf die dem Anspruch 1 bzw. 14 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: ein Schaltbild eines Ausführungsbeispiels einer erfindungsgemäßen Schutzschaltung mit redundant ausgebildeter Ansteuerschaltung und
- Fig. 2: ein Schaltbild einer konkreten Implementierung einer erfindungsgemäßen Schutzschaltung.

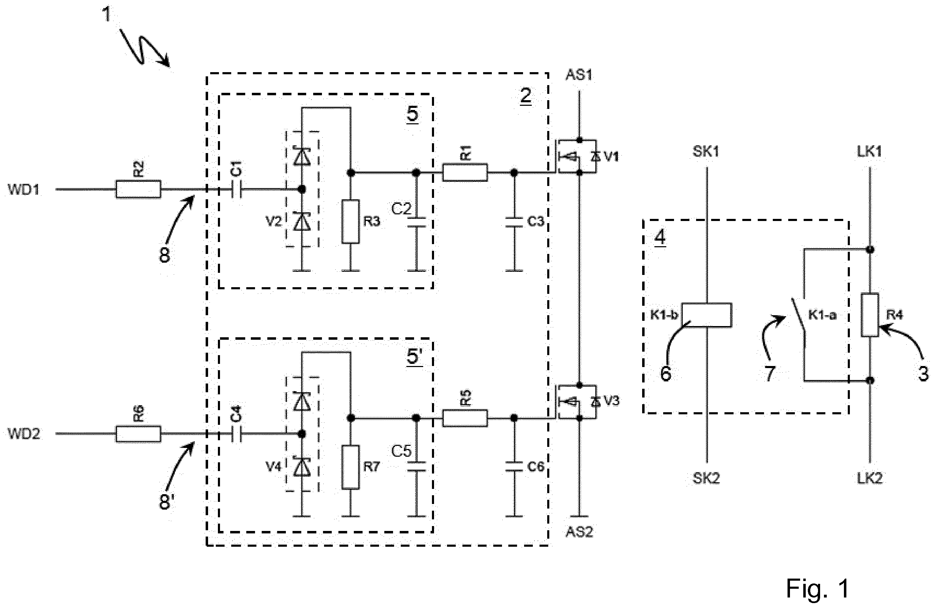

Fig. 1 zeigt ein Schaltbild eines Ausführungsbeispiels einer erfindungsgemäßen Schutzschaltung 1 für einen Wechselrichter (nicht dargestellt). Die Schutzschaltung 1 umfasst eine redundant ausgeführte Ansteuerschaltung 2 mit zwei identisch aufgebauten Zweigen. Ferner umfasst die Schutzschaltung 1 ein Sicherungselement 3 sowie eine Schalteinrichtung 4 in Form eines Relais K1.

Ein nicht dargestelltes Steuersystem erzeugt periodisch Steuerpulse WD1, die in einen der beiden redundanten Zweige der Ansteuerschaltung 2 (in Fig. 1 der obige Zweig) eingegeben wird. Entsprechend werden in den unteren Zweig der Ansteuerschaltung periodisch Steuerpulse WD2 eingegeben. Wegen des identischen Aufbaus der beiden Zweige beziehen sich die nachfolgenden Ausführungen auf beide Zweige der Ansteuerschaltung, wobei die Bezeichnungen ohne Klammern jeweils den oberen Zweig betreffen und die Bezeichnungen in Klammen jeweils den unteren Zweig.

Die Steuerpulse WD1 (WD2) passieren eine Reihenschaltung aus einem Widerstand R2 (R6) und eine Kapazität C1 (C4) und werden danach in die Ansteuerschaltung 2 an deren Steuereingang 8 (8') eingegeben. Der Widerstand R2 (R6) dient der Begrenzung des durch das Steuersystem ausgegebenen Stroms. Kapazität C1 (C4) fungiert als Hochpass, die eine gleichspannungsmäßige Trennung zwischen Steuersystem und Ansteuerschaltung 2 herstellt.

Die Ansteuerschaltung 2 umfasst eine Ladungspumpe 5 (5') sowie einen Widerstand R1 (R5) und eine Kapazität C3 (C6). Die Ladungspumpe 5 (5') besteht aus zwei Schottky-Dioden V2 (V4), die in Reihe zueinander geschaltet sind und deren Durchlassrichtung jeweils von einem Massepotential weg gerichtet ist. Entsprechend ist die Anode der unteren Diode V2ᵤ (V4ᵤ) mit Masse verbunden. Der Verbindungspunkt zwischen der unteren Diode V2ᵤ (V4ᵤ) und der oberen Diode V2ₒ (V4ₒ) bildet den Eingang der Ladungspumpe 5 (5'). Die Kathode der oberen Diode V2ₒ (V4ₒ) ist jeweils mit einem Anschluss eines Entladewiderstands R3 (R7) und einer Speicherkapazität C2 (C5) verbunden, wobei der Verbindungspunkt zwischen den drei Bauelementen den Ausgang der Ladungspumpe 5 (5') bildet. Der zweite Anschluss des Entladewiderstands R3 (R7) und der Speicherkapazität C2 (C5) ist jeweils mit Masse verbunden.

Der Widerstand R1 (R5) ist mit einem Anschluss mit einem Ausgang der Ladungspumpe 5 (5') verbunden, mit dem zweiten Anschluss mit der Kapazität C3 (C6). Der zweite Anschluss der Kapazität C3 (C6) ist auf Masse gelegt. Der Verbindungspunkt zwischen Widerstand R1 (R5) und Kapazität C3 (C6) ist mit einem Gate eines selbstsperrenden n-Kanal-MOSFETs V1 (V3) verbunden, der als Treibertransistor für die Schalteinrichtung fungiert. Widerstand R1 (R5) und Kapazität C3 (C6) bilden eine Filterschaltung, insbesondere ein Tiefpass, der Wechselanteile in der Ausgangsspannung aus der Ladungspumpe 5 (5') reduziert.

Es sei darauf hingewiesen, dass die Widerstände R2 (R6) und R1 (R5) sowie der Kondensator C3 (C6) optional sind und für die Funktion der Schutzschaltung nicht zwangsläufig vorhanden sein müssen. Da sie die Komponenten des Wechselrichtersystems jedoch schützen, sind sie in der dargestellten bevorzugten Ausgestaltung vorgesehen.

Die beiden MOSFETs V1 und V3 sind in Reihe zueinander geschaltet, d.h. die Source des MOSFETs V1 ist mit dem Drain des MOSFETs V2 verbunden. Die Source des MOSFETs V2 ist auf Masse geschaltet, während der Drain des MOSFETs V1 mit der Erregerspule 6 des Relais verbunden ist. Konkret bedeutet dies, dass die Anschlüsse AS1 und SK2 miteinander verbunden sind. Der zweite Anschluss SK1 der Erregerspule 6 ist mit einer Versorgungsspannung beaufschlagt. Der Schaltkontakt 7 des Relais ist mit seinen beiden Anschlüssen beidseits des Sicherungselements 3 angeschlossen. Ohne Strom durch die Erregerspule ist der Schaltkontakt 7 geöffnet, mit bestromter Erregerspule 6 schließt der Schaltkontakt 7 und befindet sich damit in einem durchgeschalteten Zustand. Die Schalteinrichtung 4 und das Sicherungselement 3 befinden sich vorzugsweise direkt nach einem Brückengleichrichter (nicht dargestellt) über LK1 und LK2 im Lastkreis, d.h. das Sicherungselement 3 ist in Gleichspannungszwischenkreis angeordnet. Das Sicherungselement ist dabei als Sicherungswiderstand ("Fuse Resistor") R4 ausgebildet.

Im Betrieb der Schutzschaltung dienen die Speicherkapazitäten C2 und C5 als Ladungsspeicher, welche im regulären Fall bei jedem positiven WDx-Signalpegel geladen werden, sodass beim Erreichen der benötigten Gate-Source-Spannung der jeweilige MOSFET V1 bzw. V3 niederohmig wird. Die Steuerpulse WD1 und WD2 müssen sich oberhalb einer festgelegten Frequenz befinden, welche von den Hochpässen im Eingang (C1 bzw. C4) und von den Ladungsspeichern (C2 und C5) und deren Entladewiderständen (R3 und R7) abhängig ist. Wird das WDx-Signal auf ein stationäres High-Pegel gezogen oder kommt es beim Controller zu einem Fehlerfall, bei dem dauerhaft ein High-Pegel an den entsprechenden Ausgängen ansteht, werden die Kapazitäten C1 bzw. C4 hochohmig, sodass der Stromfluss zu den Speicherkapazitäten C2 bzw. C5 unterbunden wird.

Die oberen Dioden V2ₒ und V4ₒ verhindern jeweils das Entladen der Speicherkapazitäten C2 und C5, wenn am WDx-Signal Low ansteht. Die unteren Dioden V2ᵤ und V4ᵤ gewährleisten das Entladen der Kapazitäten C1 und C4, wenn am WDx-Signal Low ansteht, sodass im darauffolgenden Zyklus wieder ein Stromfluss in die Speicherkapazitäten C2 bzw. C5 möglich ist. Die hochohmigen Widerstände R3 und R7 entladen die Speicher C2 und C5, sodass im Fehlerfall die Ansteuersignale der FETs nach einer bestimmten Zeit auf Low gezogen werden und diese das Relais abfallen lassen.

Beim Einschalten wird der Zwischenkreis über das Sicherungselement 3 geladen, sodass der Einschaltstrom durch dieses begrenzt ist. Die Elektronik kann ihre Funktion aufnehmen. Sobald dies der Fall ist, erzeugt das Steuersystem bzw. der dort arbeitende Mikrocontroller periodisch Steuerpulse am WDx-Ausgang, wobei noch kein Laststrom fließt. Sobald der Controller Steuerpulse im korrekten Frequenzband ausgibt und die Speicherkapazitäten geladen sind, schalten die FETs die Masse durch und das Relais zieht an. Dadurch wird der Fuse Resistor R4 überbrückt und der Laststromkreis wird niederohmiger. Im Fehlerfall PTOM mit / ohne Zweitfehler stehen die Steuerpulse WDx nicht mehr am Eingang der Schutzschaltung an und das Relais fällt ab. Der Fuse Resistor R4 öffnet nach kurzem Laststromfluss den Zwischenkreis, sodass ein sicherer Zustand der Elektronik eingenommen wird.

Das im Zusammenhang mit Fig. 1 beschriebene Ausführungsbeispiel kann einige oder aller der nachfolgenden Vorteile und Eigenschaften realisieren:
- hohe Spannungsfestigkeit, um bei Überspannung (beispielsweise durch Brücken anderer Potentiale) die Funktion nicht zu verlieren
- hohe Spannungsfestigkeit, um weitere Bauteile (beispielsweise Z-Dioden) zu vermeiden
- Erhöhung der Effizienz
- Zwei voneinander unabhängige Steuerspannungen (*WD1* und *WD2*), um bei einem Zweitfehler die Funktion nicht zu verlieren
- die Schaltung ist redundant ausgeführt, um bei kombinierten Fehlern die Funktion aufrecht zu halten
- Relais, die UL oder VDE zugelassen sind, müssen als Schaltelement nicht redundant sein; falls nicht zugelassene Relais, elektronische Schalter / Schalteinheiten oder Halbleiterrelais eingesetzt werden, sollten diese - zur Aufrechterhaltung der Redundanz der gesamten Schutzschaltung - redundant sein
- bei der Software, welche die Steuerspannungen WD1 und WD2 kontrolliert, sollte sich um eine für die funktionale Sicherheit vom VDE zugelassene Software handeln
- der Fuse Resistor muss so dimensioniert sein, dass bei maximalem Wicklungswiderstand die Last an besagtem so groß ist, dass er sicher auslöst.
- Falls ein PTC als Sicherungselement verwendet wird, muss dieser so dimensioniert sein, dass der resultierende Stromfluss bei maximalem Wicklungswiderstand keine unzulässige Erwärmung verursacht.

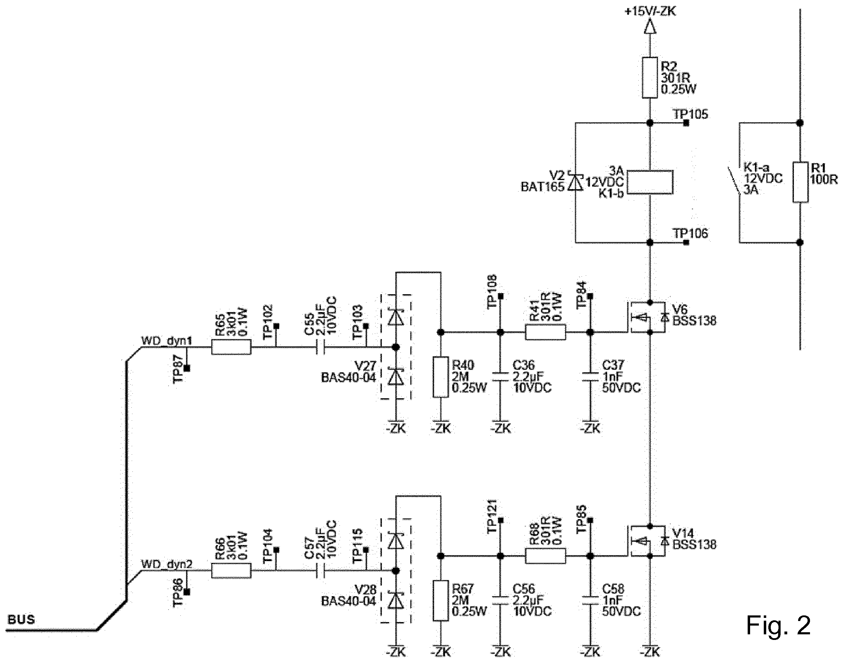

In Fig. 2 ist eine konkrete Ausgestaltung einer erfindungsgemäßen Schutzschaltung dargestellt, wobei die dargestellte Schutzschaltung weitgehend dem Ausführungsbeispiel gemäß Fig. 1 entspricht. Es sei darauf hingewiesen, dass die verwendeten Bezeichnungen in Fig. 2 nicht mit denen in Fig. 1 übereinstimmen.

Hinsichtlich weiterer vorteilhafter Ausgestaltungen der erfindungsgemäßen Schutzschaltung bzw. der erfindungsgemäßen Wechselrichtersystems wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Schutzschaltung lediglich zur Erörterung der beanspruchten Lehre dienen, diese jedoch nicht auf das Ausführungsbeispiel einschränken.

### Bezugszeichenliste

- 1: Schutzschaltung
- 2: Ansteuerschaltung
- 3: Sicherungselement
- 4: Schalteinrichtung
- 5: Ladungspumpe
- 6: Erregerspule
- 7: Schaltkontakt
- 8: Steuereingang

- K1: Relais
- WD1: Steuerpuls 1
- WD2: Steuerpuls 2
- C1: Kapazität (Hochpass)
- C2: Speicherkapazität
- C3: Kapazität (Tiefpass)
- C4: Kapazität (Hochpass)
- C5: Speicherkapazität
- C6: Kapazität (Tiefpass)
- R1: Widerstand
- R2: Widerstand (Strombegrenzung)
- R3: Entladewiderstand
- R4: Sicherungswiderstand
- R5: Widerstand
- R6: Widerstand (Strombegrenzung)
- R7: Entladewiderstand

- V1: MOSFET (n-Kanal, selbstsperrend)
- V2: Dioden V2ₒ und V2ᵤ
- V3: MOSFET (n-Kanal, selbstsperrend)
- V4: Dioden V40 und V4ᵤ

- AS1: Ansteuer-Anschluss 1
- AS2: Ansteuer-Anschluss 2
- SK1: Schaltkontakt-Anschluss 1
- SK2: Schaltkontakt-Anschluss 2
- LK1: Lastkreis-Anschluss 1
- LK2: Lastkreis-Anschluss 2

## Patentansprüche

1. Schutzschaltung für einen Wechselrichter, wobei der Wechselrichter ein Steuersystem und ein durch das Steuersystem mittels Ansteuersignalen angesteuertes Leistungsteil aufweist und wobei das Steuersystem zur periodischen Ausgabe eines Steuerpulses (WD1, WD2) ausgebildet ist,
die Schutzschaltung umfassend ein Sicherungselement (3), eine Schalteinrichtung (4) und eine Ansteuerschaltung (2), wobei das Sicherungselement (3) in einer Zuleitung zu dem Leistungsteil angeordnet ist, wobei die Schalteinrichtung (4) derart mit dem Sicherungselement (3) verschaltet ist, dass die Schalteinrichtung (4) in einem durchgeschalteten Zustand das Sicherungselement (3) überbrückt,
wobei die Ansteuerschaltung (2) einen Steuereingang (8, 8') aufweist, an dem der Steuerpuls (WD1, WD2) anliegt,
**dadurch gekennzeichnet, dass**
die Ansteuerschaltung (2) derart ausgebildet ist, dass die Ansteuerschaltung (2) nach Empfang eines Steuerpulses (WD1, WD2) oder mehrerer aufeinander folgender Steuerpulse (WD1, WD2) für eine vorbestimmte Zeitspanne ein Schaltsignal an die Schalteinrichtung (4) ausgibt, wodurch die Schalteinrichtung (4) bei periodischem Empfang des Steuerpulses (WD1, WD2) durchgeschaltet ist und wodurch bei Ausbleiben des Steuerpulses (WD1, WD2) die Schalteinrichtung (4) nach der vorbestimmten Zeitspanne öffnet und eine Sicherung des Wechselrichters durch das Sicherungselement (3) auslöst.

2. Schutzschaltung nach Anspruch 1, wobei das Sicherungselement (3) durch einen Widerstand gebildet ist.

3. Schutzschaltung nach Anspruch 2, wobei der Widerstand als PTC (Positive Temperature Coefficient) ausgebildet ist, wobei der PTC mit zunehmender Temperatur einen zunehmend ohmschen Widerstand annimmt.

4. Schutzschaltung nach Anspruch 2, wobei der Widerstand als Sicherungswiderstand (Fuse Resistor) (R4) ausgebildet ist, der in einem Grundzustand einen ersten Widerstandswert aufweist, wobei der Sicherungswiderstand (R4) bei Überschreiten einer Grenzbelastung einen zweiten Widerstandswert annimmt, der wesentlich größer ist als der erste Widerstandswert.

5. Schutzschaltung nach einem der Ansprüche 1 bis 4, wobei eine Folge von periodisch ausgegebenen Steuerpulsen (WD1, WD2) ein Rechtecksignal bildet, vorzugsweise ein unipolares Rechtecksignal.

6. Schutzschaltung nach einem der Ansprüche 1 bis 5, wobei die Ansteuerschaltung (2) eine Ladungspumpe (5, 5') aufweist, an deren Eingang, vorzugsweise über ein Hochpassfilter, der Steuerpuls (WD1, WD2) anliegt.

7. Schutzschaltung nach Anspruch 6, wobei die Ladungspumpe (5, 5') zwei Dioden (V2ᵤ, V2ₒ, V4ᵤ, V4ₒ) und eine Speicherkapazität (C2, C5) umfasst, wobei die beiden Dioden (V2ᵤ, V2ₒ, V4ᵤ, V4ₒ) in Reihe geschaltet sind und die Durchlassrichtungen beider Dioden (V2ᵤ, V2ₒ, V4ᵤ, V4ₒ) von einem Massepotential wegweisen, wobei der Eingang der Ladungspumpe durch den Verbindungspunkt zwischen den beiden Dioden (V2ᵤ, V2ₒ, V4ᵤ, V4ₒ) gebildet ist, wobei die Speicherkapazität (C2, C5) parallel zu den beiden Dioden (V2ᵤ, V2ₒ, V4ᵤ, V4ₒ) geschaltet ist und wobei vorzugsweise parallel zu der Speicherkapazität (C2, C5) ein Entladewiderstand (R3, R7) geschaltet ist, über den die Speicherkapazität (C2, C5) definiert entladen wird.

8. Schutzschaltung nach Anspruch 7, wobei die Spannung an der Speicherkapazität (C2, C5), vorzugsweise nach Filterung über eine Filterschaltung, das Schaltsignal bildet.

9. Schutzschaltung nach einem der Ansprüche 1 bis 8, wobei die Schalteinrichtung (4) durch einen Transistor gebildet ist, wobei das Schaltsignal auf einen Steuereingang des Transistors geschaltet ist.

10. Schutzschaltung nach einem der Ansprüche 1 bis 8, wobei die Schalteinrichtung durch ein Relais (K1) mit mindestens einem Schaltkontakt (7) und einer Erregerspule (6) gebildet ist, wobei einer der mindestens einen Schaltkontakte (7) parallel zu dem Sicherungselement (3) angeordnet sind.

11. Schutzschaltung nach Anspruch 10, wobei das Schaltsignal auf einen Steuereingang eines Transistors geschaltet ist und dass der Transistor den Strom für eine Erregerspule (6) steuert.

12. Schutzschaltung nach einem der Ansprüche 1 bis 11, wobei die Ansteuerschaltung (2) und/oder die Schalteinrichtung (4) redundant ausgebildet ist, wobei die Ansteuerschaltung (2) mindestens zwei vorzugsweise identisch ausgestaltete Zweige aufweist.

13. Schutzschaltung nach Anspruch 9 und 12 oder nach Anspruch 11 und 12, wobei für jeden der redundanten Zweige der Ansteuerschaltung (2) ein Transistor vorgesehen ist, wobei die Transistoren zueinander in Reihe geschaltet sind.

14. Wechselrichtersystem mit einem Steuersystem, einem Leistungsteil und einer Schutzschaltung (1) nach einem der Ansprüche 1 bis 13, wobei das Steuersystem zur Ausgabe von Ansteuersignalen an das Leistungsteil zum Erzeugen und Ausgeben einer Wechselspannung ausgebildet ist, wobei das Steuersystem zusätzlich zur periodischen Ausgabe eines Steuerpulses (WD1, WD2) ausgebildet ist, der auf die Schutzschaltung (1) geschaltet ist.

15. Wechselrichtersystem nach Anspruch 14, beinhaltend Mittel zum Erkennen eines Betriebszustands des Wechselrichtersystems und/oder einer an das Wechselrichtersystem angeschlossenen Last, wobei die Mittel zum Erkennen des Betriebszustands dazu ausgebildet sind, bei einem kritischen Betriebszustand die Erzeugung eines Steuerpulses (WD1, WD2) zu deaktivieren.

## Claims

1. A protective circuit for an inverter, with the inverter comprising a control system and a power element controlled by the control system, with the control system being embodied for issuing control signals to the power element, and with the control system being embodied for the periodic issuance of a control pulse (WD1, WD2), the protective circuit comprising:
a safety element (3),
a switching arrangement (4), and
a control circuit (2),
wherein:
the safety element (3) is arranged in a feed line to the power element,
the switching arrangement (4) is switched to the safety element (3) such that the switching arrangement (4) bridges the safety element (3) into a switched-through state,
the control switch (2) comprises a control input (8, 8'), at which the control pulse (WD1, WD2) is applied, and
the control circuit (2) is configured such that the control circuit (2), upon receipt of a control pulse (WD1, WD2) or several successive control pulses (WD1, WD2) emits for a predetermined period of time a switching signal to the switching arrangement (4), causing the switching arrangement (4) to switch through when periodically receiving the control pulse (WD1, WD2) and when the control pulse (WD1, WD2) is missing, the switching arrangement (4) opens after a predetermined period, and a safety of the inverter is triggered by the safety element (3).

2. A protective circuit according to claim 1, wherein the safety element (3) is formed by a resistance.

3. A protective circuit according to claim 2, wherein the resistance is embodied as a PTC (positive temperature coefficient), with the PTC with increasing temperature assuming greater impedance levels.

4. A protective circuit according to claim 2, wherein the resistance is embodied as a safety resistance (fuse resistance) (R4), which shows in an initial state a first resistance value, with the safety resistance (R4) upon a limit load being exceeded assuming a second resistance value, which is considerably greater than the first resistance value.

5. A protective circuit according to claims 1 to 4, wherein a sequence of periodically emitted control pulses (WD1, WD2) forms a square-wave signal, especially an unipolar square-wave signal.

6. A protective circuit according to claims 1 to 5, wherein the control circuit (2) comprises a charge pump (5, 5'), with a control pulse (WD1, WD2) being applied at its input, and wherein the control pulse (WD1, WD2) especially is applied via a highpass filter of the charge pump.

7. A protective circuit according to claim 6, wherein the charge pump (5, 5') comprises two diodes (V2u, V2o, V4u, V4o) and a storage capacity (C2, C5), with the two diodes (V2u, V2o, V4u, V4o) being switched serially and the switching through directions of both diodes (V2u, V2o, V4u, V4o) pointing away from a ground, with the input of the charge pump being formed by the connection site between the two diodes (V2u, V2o, V4u, V4o), and with the storage capacity (C2, C5) being switched parallel in reference to both diodes (V2u, V2o, V4u, V4o), and wherein a discharge resistance (R3, R7) is switched parallel to the storage capacity (C2, C5) by which the storage capacity (C2, C5) is discharged in a defined fashion.

8. A protective circuit according to claim 7, wherein the voltage at the storage capacity (C2, C5) forms the switching signal after filtering via a filter circuit.

9. A protective circuit according to claims 1 to 8, wherein the switching arrangement (4) is formed by a transistor, with the switching signal being switched to a control input of the transistor.

10. A protective circuit according to claims 1 to 9, wherein the switching arrangement is formed by a relay (K1) with at least one switching contact (7) and an exciter coil (6), with at least one switching contact (7) being arranged parallel to the safety element (3).

11. A protective circuit according to claim 10, wherein the switching signal is switched to a control input of a transistor, and the transistor controls the current for the exciter coil (6).

12. A protective circuit according to claims 1 to 11, wherein the control circuit (2) and/or the switching arrangement (4) are embodied redundantly, with the control circuit (2) comprising at least two identically embodied paths.

13. A protective circuit according to claims 9 and 12 or 11 and 12, wherein a transistor is provided for each of the redundant paths of the control circuit (2), with the transistors being switched serially.

14. An inverter system with a control system, a power element, and a protective circuit (1) according to claims 1 to 13, with the control system being embodied for issuing control signals to the power element in order to generate and issue an alternating voltage, with the control system additionally being embodied for a periodic issuance of a control pulse (WD1, WD2) switched to the protective circuit (1).

15. An inverter system according to claim 14, further comprising means for detecting an operating state of the inverter system and/or a load connected to the inverter system, with the means for detecting the operating state being embodied to deactivate the generation of a control pulse (WD1, WD2) in case of a critical operating state.

## Revendications

1. Circuit de protection pour un onduleur ; dans lequel l'onduleur comprend un système de commande et une partie de puissance contrôlée par le système de commande au moyen de signaux de commande et dans lequel le système de commande est conçu pour l'émission périodique d'une impulsion de commande (WD1, WD2), ce circuit de protection comprenant un élément de sécurité (3), un dispositif de commutation (4) et un circuit de commande (2), dans lequel l'élément de sécurité (3) est disposé dans une ligne d'alimentation vers la partie de puissance, dans lequel le dispositif de commutation (4) est branché avec l'élément de sécurité (3) de façon à ce que le dispositif de commutation (4) court-circuite l'élément de sécurité (3) dans un état commuté,
dans lequel le circuit de commande (2) comprend une entrée de commande (8, 8') au niveau de laquelle est appliquée l'impulsion de commande (WD1, WD2),
**caractérisé en ce que** le circuit de commande (2) est conçu de façon à ce que le circuit de commande (2), après la réception d'une impulsion de commande (WD1, WD2) ou de plusieurs impulsions de commande (WD1, WD2) successives, émette, pendant un laps de temps prédéterminé, un signal de commutation au dispositif de commutation (4), ce qui commute le dispositif de commutation (4) lors d'une réception périodique de l'impulsion de commande (WD1, WD2) et ce qui, en cas d'absence de l'impulsion de commande (WD1, WD2), ouvre le dispositif de commutation (4) après le laps de temps prédéterminé et déclenche une sécurité de l'onduleur par l'intermédiaire de l'élément de sécurité (3).

2. Circuit de protection selon la revendication 1, dans lequel l'élément de sécurité (3) est constitué d'une résistance.

3. Circuit de protection selon la revendication 2, dans lequel la résistance est conçue comme une résistance PTC (Positive Temperature Coefficient), dans lequel la résistance PTC présente une valeur de résistance ohmique croissante lorsque la température augmente.

4. Circuit de protection selon la revendication 2, dans lequel la résistance est conçue comme une résistance de sécurité (Fuse Resistor) (R4) qui présente, dans un état de base, une première valeur de résistance, dans lequel la résistance de sécurité (R4), lors du dépassement d'une charge limite, prend une deuxième valeur de résistance qui est nettement supérieure à la première valeur de résistance.

5. Circuit de protection selon l'une des revendications 1 à 4, dans lequel une suite d'impulsions (WD1, WD2) émises périodiquement constitue un signal rectangulaire, de préférence un signal rectangulaire unipolaire.

6. Circuit de protection selon l'une des revendications 1 à 5, dans lequel le circuit de commande (2) comprend une pompe de charge (5, 5') à l'entrée de laquelle est appliquée l'impulsion de commande (WD1, WD2), de préférence par l'intermédiaire d'un filtre passe-haut.

7. Circuit de protection selon la revendication 6, dans lequel la pompe de charge (5, 5') comprend deux diodes (V2ᵤ, V2ₒ, V4ᵤ, V4ₒ) et un condensateur de stockage (C2, C5), dans lequel les deux diodes (V2ᵤ, V2ₒ, V4ᵤ, V4ₒ) sont branchées en série et les sens passants des deux diodes (V2ᵤ, V2ₒ, V4ᵤ, V4ₒ) s'éloignent d'un potentiel de masse, dans lequel l'entrée de la pompe de charge est constituée par le point de liaison entre les deux diodes (V2ᵤ, V2ₒ, V4ᵤ, V4ₒ), dans lequel le condensateur de stockage (C2, C5) est branché en parallèle aux deux diodes (V2ᵤ, V2ₒ, V4ᵤ, V4ₒ) et dans lequel, de préférence parallèlement au condensateur de stockage (C2, C5), est branchée une résistance de décharge (R3, R7), par l'intermédiaire de laquelle le condensateur de stockage (C2, C5) est déchargé de manière définie.

8. Circuit de protection selon la revendication 7, dans lequel la tension au niveau du condensateur de stockage (C2, C5), de préférence après filtrage par un circuit de filtrage, constitue le signal de commutation.

9. Circuit de protection selon l'une des revendications 1 à 8, dans lequel le circuit de commutation (4) est constitué d'un transistor, dans lequel le signal de commutation est branché sur une entrée de commande du transistor.

10. Circuit de protection selon l'une des revendications 1 à 8, dans lequel le circuit de commutation est constitué d'un relais (K1) avec au moins un contact de commutation (7) et une bobine excitatrice (6), dans lequel un des au moins un contact de commutation (7) est disposé parallèlement à l'élément de sécurité (3).

11. Circuit de protection selon la revendication 10, dans lequel le signal de commutation est branché sur une entrée de commande d'un transistor et le transistor contrôle le courant pour une bobine excitatrice (6).

12. Circuit de protection selon l'une des revendications 1 à 11, dans lequel le circuit de commande (2) et/ou le dispositif de commutation (4) est conçu de manière redondante, dans lequel le circuit de commande (2) comprend au moins deux branches conçues, de préférence, de manière identique.

13. Circuit de protection selon la revendication 9 et 12 ou selon la revendication 11 et 12, dans lequel, pour chacune des branches redondantes du circuit de commande (2), un transistor est prévu, dans lequel les transistors sont branchés en série l'un à l'autre.

14. Système d'onduleur avec un système de commande, une partie de puissance et un circuit de protection (1) selon l'une des revendications 1 à 13, dans lequel le système de commande est conçu pour l'envoi de signaux de commande à la partie de puissance, pour la production et l'émission d'une tension alternative, dans lequel le système de commande est en outre conçu pour l'émission périodique d'une impulsion de commande (WD1, WD2) qui est branchée sur le circuit de protection (1).

15. Système d'onduleur selon la revendication 14, contenant des moyens pour la reconnaissance d'un état de fonctionnement du système d'onduleur et/ou d'une charge raccordée au système d'onduleur, dans lequel les moyens de reconnaissance de l'état de fonctionnement sont conçus pour désactiver, lors d'un état de fonctionnement critique, la production d'une impulsion de commande (WD1, WD2).
